Europäisches Patentamt

European Patent Office

Office européen des brevets

(11) Publication number: 0 240 157 A2

# EUROPEAN PATENT APPLICATION

(21) Application number: 87301755.2

(22) Date of filing: 27.02.87

(51) Int. Cl.⁴: **H04B 9/00** , H04L 25/30 , H04L 7/02 , H04L 1/24 , G02B 6/26

(30) Priority: 03.03.86 JP 45881/86

(43) Date of publication of application:
07.10.87 Bulletin 87/41

(84) Designated Contracting States:
DE GB

(71) Applicant: **SEIKO INSTRUMENTS INC.**
**31-1, Kameido 6-chome Koto-ku**
**Tokyo 136(JP)**

(72) Inventor: **Sato, Hirochika**
**c/o Seiko Instruments Inc. 31-1 Kameido**
**6-chome**
**Koto-Ku Tokyo(JP)**
Inventor: **Uchiyama, Takeshi**
**c/o Seiko Instruments Inc. 31-1 Kameido**
**6-chome**
**Koto-Ku Tokyo(JP)**
Inventor: **Nakayama, Haruo**
**c/o Seiko Instruments Inc. 31-1 Kameido**
**6-chome**
**Koto-Ku Tokyo(JP)**
Inventor: **Hagami, Yoshihisa**
**c/o Seiko Instruments Inc. 31-1 Kameido**
**6-chome**
**Koto-Ku Tokyo(JP)**
Inventor: **Sato, Yoshiro**
**c/o Seiko instruments Inc. 31-1 Kameido**
**6-chome**
**Koto-Ku Tokyo(JP)**

(74) Representative: **Caro, William Egerton et al**
**J. MILLER & CO. Lincoln House 296-302 High**
**Holborn**
**London WC1V 7JH(GB)**

(54) A single transmission line bidirectional optical communication system.

(57) A single transmission line bidirectional optical communication system comprises a directional coupler (10) including a polarising beam splitter (11) and an optical system for separating an optical output signal to be outputted to a single transmission line (100) and an optical input signal to be inputted from said single transmission line. An optical transmitting circuit (20) is provided for coding original data (DO) by using a clock signal (CKT) of predetermined frequency and for subsequently converting the coded data into an optical signal by means of a light emitting element (23). An optical receiving circuit (30) converts an optical input signal into an electric signal, amplifies the electric signal, recognises the electric signal through a comparator (33) including an automatic threshold controlling circuit for automatically setting a threshold level at a substantially average value of input signal intensities, and subse-

quently decodes the signal to reproduce and output the clock signal and data (D1). An optical output controlling circuit (40) controls whether or not an optical signal needs to be outputted from the optical transmitting circuit (20). A frequency discriminating circuit (50) discriminates the frequency of the reproduced clock signal (CKR) to output a status signal (STC) indicating said frequency. A clock controlling circuit (60) determines and outputs its own transmission clock frequency (CKT) according to the status signal (STC) coming from the frequency discriminating circuit (50) in the state in which no optical signal is outputted from the optical transmitting circuit (20) under the control of the optical output controlling circuit (40), and for outputting a status signal (STM) indicating the transmission clock frequency.

FIG. 1

2

# A SINGLE TRANSMISSION LINE BIDIRECTIONAL OPTICAL COMMUNICATION SYSTEM

This invention relates to single transmission line bidirectional optical communication systems capable of performing bidirectional data communications through a single transmission line between two distant places.

In single line bidirectional communication using a single transmission line, e.g. one optical fibre, prior systems known to the applicants are accompanied by the problem of crosstalk in which an optical signal transmitted by itself is mixed with an optical signal from a remote side. This problem is caused, in a multiple optical wavelength system changing the mutual optical communication wavelengths and separating them by using a branching filter, by the crosstalk due to insufficient separation between the optical wavelengths and, in an identical optical wavelength system using a directional coupler, by the crosstalk due to a reflected beam at a connected point of the optical fibre.

As a countermeasure it is possible to widen sufficiently the interval between the individual wavelengths in the multiple optical wavelength system. This produces a marked increase in cost and is impractical because of the use of a light emitting element of special wavelengths and because of the requirement of the branching filter to work highly precisely. In the identical optical wavelength system, on the other hand, the influences of the reflected beam is prevented by setting the threshold voltage Vth of an optical receiving circuit at a higher level than that of the reflected beam intensity by means of a half-fixed resistor or a changeover switch. This system can be constructed at a lower cost because it can have an optical transmitting circuit of the same wavelength and of the directional coupler, but has to have the threshold voltage adjusted each time the system is installed, so as not to detect the reflected beam but to detect only the signal beam because the threshold voltage Vth is fixed. In the case of long-range communication in which the signal beam becomes weak, moreover, the difference between the signal voltage and the threshold voltage becomes so small as to facilitate degradation of bit error rate (i.e., BER) so that the system can be used only for short-range communication. Still, the directional coupler cannot eliminate the near end reflection, because it uses a half mirror, so that it makes impossible long-range communication where the signal beam becomes weak.

Furthermore, in the case where a power supply of a remote communication system is OFF or in the case where the optical fibre is not connected or cut, the known single line bidirectional communication systems are accompanied by the problem that an intra-office station will detect the carrier outputted from itself, when its power supply is ON, to judge as if the communication circuit would be set. This makes it necessary for the user to confirm every time whether or not the circuit is really set. Moreover, line abnormalities, in operation, cannot be easily detected for the same reason.

The present invention seeks to provide a single transmission line bidirectional optical communication system which can reduce the influences of a reflected beam in an identical optical wavelength communication system to conduct long distance communication at a reasonable cost and to markedly improve practical usability, operability and reliability.

According to the present invention there is provided a single transmission line bidirectional optical communication system characterised by comprising: a directional coupler including a polarising beam splitter and an optical system for separating an optical output signal to be outputted to a single transmission line and an optical input signal to be inputted from said single transmission line; an optical transmitting circuit for coding original data by using a clock signal of predetermined frequency and for subsequently converting the coded data into an optical signal by means of a light emitting element; an optical receiving circuit for converting an optical input signal into an electric signal, for amplifying the electric signal, for recognising the electric signal through a comparator including an automatic threshold controlling circuit for automatically setting a threshold level at a substantially average value of input signal intensities, and for subsequently decoding the signal to reproduce and output the clock signal and data; an optical output controlling circuit for controlling whether or not an optical signal needs to be outputted from said optical transmitting circuit; a frequency discriminating circuit for discriminating the frequency of said reproduced clock signal to output a status signal indicating said frequency; and a clock controlling circuit for determining and outputting its own transmission clock frequency according to the status signal coming from said frequency discriminating circuit in the state in which no optical signal is outputted from said optical transmitting circuit under the control of said optical output controlling circuit, and for outputting a status signal indicating said transmission clock frequency.

Said directional coupler and the light emitting element in said optical transmitting circuit may be integral with each other.

Preferably said optical output controlling circuit is arranged to interrupt the optical signal output from said optical transmitting circuit immediately after a power supply or resetting operation and outputs the optical signal after a lapse of a predetermined time period.

Said clock controlling circuit, in the preferred embodiment, comprises an oscillation circuit, a variable frequency dividing circuit and a control logic circuit arranged so that, in operation, the oscillation circuit outputs an clock signal of predetermined frequency, the variable frequency dividing circuit divides the frequency of said clock signal at a predetermined ratio, and the control logic circuit determines the frequency division rate of said variable frequency dividing circuit in accordance with the status signal coming from said frequency discriminating circuit.

The automatic threshold controlling circuit in said optical receiving circuit may be constructed such that its comparator has its threshold value level varied with an input by using an RC circuit which has a time constant several times larger than the code period of data.

Alternatively, the automatic threshold controlling circuit in said optical receiving circuit may comprise a peak holder.

Preferably the clock frequency outputted from said clock controlling circuit has two values. Thus, desirably, the following inequalities hold, if the difference of said two frequency values is denoted by $\Delta F$, the minimum frequency difference to be recognised by said frequency discriminating circuit by $\Delta m$, and the maximum frequency difference to be decoded by said optical receiving circuit by $\Delta M$:

$$\Delta M > \Delta F > \Delta m.$$

The single transmission line bidirectional optical communication system may be such that, in operation, data encoding is conducted within 20% to 80% mark percentage.

Preferably the single transmission line bidirectional optical communication system includes a line diagnosing circuit for diagnosing the state of the transmission line from the status signal coming from said frequency discriminating circuit in the state in which an optical signal is outputted from said optical transmitting circuit under the control of said optical output controlling circuit, and said status signal coming from said clock controlling circuit.

Said line diagnosing circuit may, in operation, output a status signal.

Additionally or alternatively, the line diagnosing circuit may, in operation, output a status signal indicating that the transmission line is abnormal in the case where a reception clock frequency is either identical to a transmission clock frequency which is judged from both the status signal outputted from said clock controlling circuit and indicating its own transmission clock frequency and the status signal outputted from said frequency discriminating circuit and indicating a reception clock frequency outside a predetermined range.

The invention is illustrated, merely by way of example, in the accompanying drawings, in which:-

Figure 1 is a block diagram of a single transmission line bidirectional optical communication system according to the present invention;

Figure 2, consisting of Figures 2a and 2b, show the relationships between the quantity of a reflected beam and the length of an optical fibre;

Figure 3, consisting of Figures 3a and 3b, are waveforms of an optical signal, a reflected beam and a reproduced electric signal;

Figures 4 and 5, consisting of Figures 4a and 4b, and 5a and 5b, are timing charts illustrating the operation of the communication system of Figure 1;

Figure 6 is a block diagram of a clock controlling circuit of the communication system of Figure 1;

Figure 7 is a schematic view of a directional coupler of the communication system of Figure 1; and

Figure 8, consisting of Figures 8a and 8b, are circuit diagrams of comparators of the communication system of Figure 1.

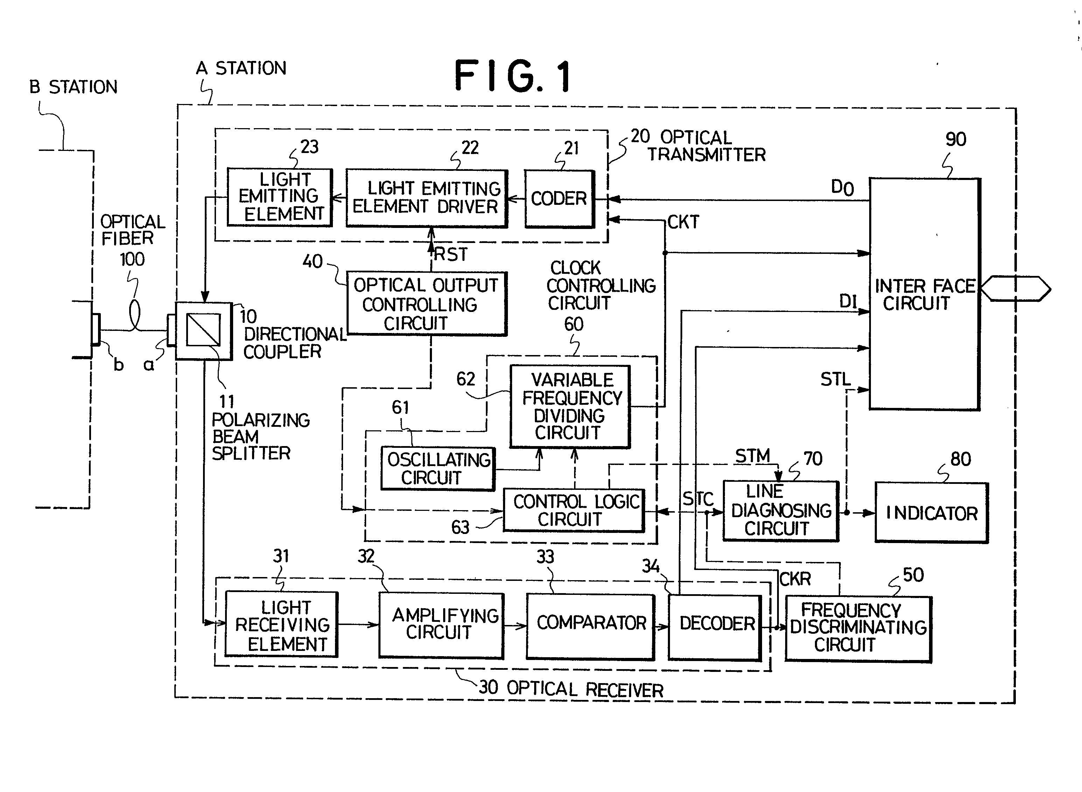

Figure 1 shows one embodiment of a single transmission line bidirectional optical communication system according to the present invention. Transmission data D0 introduced in synchronism with a transmission clock CK2 from an interface circuit 90 taking charge of data exchange with an external data terminal (not shown) is transmitted to an optical transmitter 20. The data D0 passes through both a coder 21, which is operative to code data into its own clock code in response to the transmission clock CKT outputted from a clock controlling circuit 60, and a light emitting element driver 22 which is operative to drive a light emitting element 23 such as a light emitting diode (i.e. LED) or a semiconductor laser (i.e. LD) and is subjected to electro-optical conversion by the light emitting element 23 until it is outputted to a directional coupler 10. The ideal coding type should have a mark percentage of 50% of the Manchester code or the CMI code. This is because the optical signal intensity is constant. Incidentally, if the coding type has some regularity, it does not obstruct the effect of the present invention but should not be limited by the present invention. The transmitted optical system is polarised and branched by the directional coupler 10 using a polarising beam splitter 11 and is directed into an optical fibre 100, through which it is transmitted to a remote-side communication system (i.e., a B station). The beam reflected at the near end (i.e. the a end) of the optical fibre 100 is filtered out by the polarising beam splitter 11 so that it does not enter a light receiving element 31 of an optical receiver 30 because it reserves the polarisation. On the other hand, the beam reflected from the remote end (i.e. the b end) of the optical fibre 100 and the signal beam from the B station are held in unpolarised states, because they have propagated through the optical fibre, so that they pass through the polarising beam splitter 11 and are guided into the light receiving element 31 of the optical receiver 30.

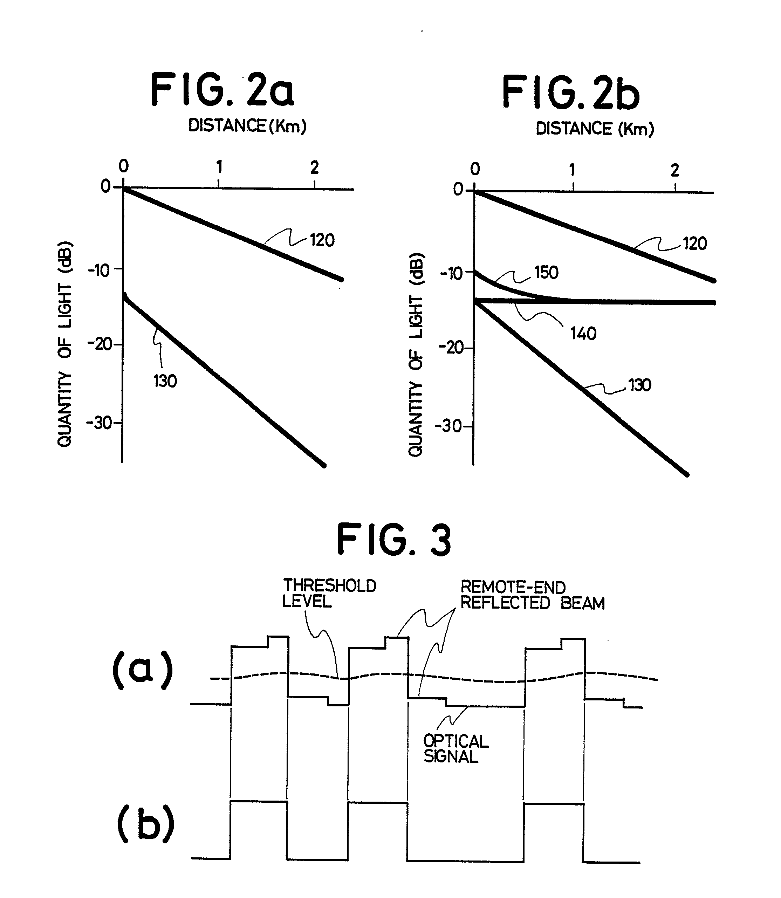

The relationship between the aforementioned quantity of the reflected beam and the length of the optical fibre is shown in Figure 2. Line 120 denotes the quantity of the signal beam. Line 130 denotes the quantity of the remote-end reflected beam. Line 140 denotes the quantity of the near-end reflected beam. Line 150 denotes total reflected beam.

It is assumed that the quantity of light inputted to the light receiving element is at 0 dB for a distance of 0, that the signal beam is attenuated at the rate of 5 dB/km by the optical fibre 100, and that the reflections at each of the end faces, (i.e. the a and b points) of the optical fibre is at -14 dB. Figure 2a shows the case in which the polarising beam splitter 11 is used. Since, in this case, the reflection of the beam occurs not at the near end but the remote end, the reflected beam is attenuated at the rate of 10 dB/km: twice as large as that of the signal beam to the length of the optical fibre. As a result, the signal beam and the reflected beam have a relatively large intensity difference for a long range so that they can be easily separated to effect long distance communication. At the branch point using the half mirror of the prior art, as shown in Figure 2b, the near-end reflected beam cannot be eliminated so that the total reflected beam is the summation of the near-end reflected beam and the remote-end reflected beam. At a long distance where the signal beam becomes weak, the signal beam and the reflected beam cannot be separated making long distance communication impossible.

Reverting to Figure 1, the beam incident upon the light receiving element 31 is converted into an electric signal, which is amplified by an amplifying circuit 32 and inputted to a comparator 33. This comparator 33 has an automatic threshold value controlling circuit for automatically setting the threshold level at a substantially average value of the input signal intensities. As shown in Figure 3a, the threshold level crosses the substantially average value of the optical signal so that the remote-end reflected beam is ignored to allow only the signal beam from the remote station to be reproduced, as shown in Figure 3b. The reproduced electric signal from the comparator 33 is reproduced and separated into data D1 and a clock CKR by a decoder 34, the data D1 being sent through the interface circuit 90 to the external data terminal and the clock CKR being sent to a frequency discriminating circuit 50. The clock is further sent as a synchronising signal necessary for introducing the data D1 into the interface circuit 90.

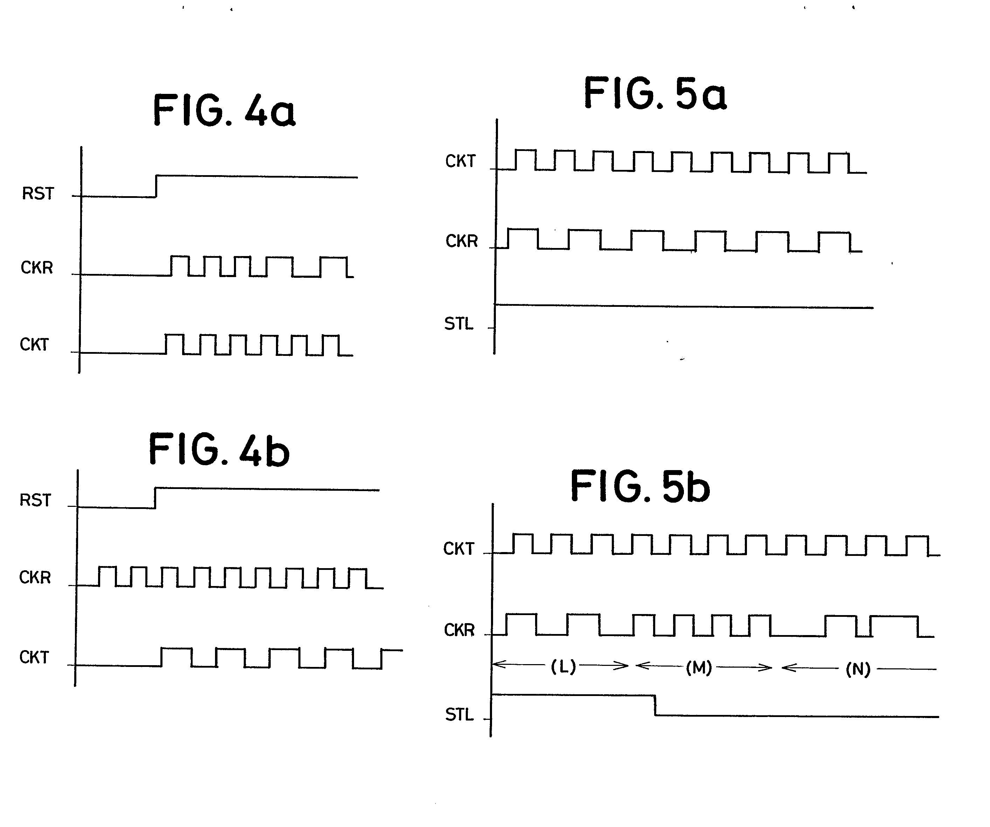

An optical output controlling circuit 40 outputs a control signal RST for controlling whether or not an optical signal is to be outputted from the optical transmitter 20. The received clock frequency is discriminated by the frequency discriminating circuit 50 and information is passed to the clock controlling circuit 60 and a line diagnosing circuit 70 by a status signal STC indicating the received clock frequency. In the state where the communication line has to be immediately set as upon the power supply or after a reset operation, the optical output controlling circuit 40 uses the control signal RST to stop the optical output of the optical transmitter 20 thereby not to output its own optical signal to the optical fibre 100. Since the optical receiving circuit 30 is operating at this time, it must be outputting the data D1 and the clock CKR, if the B station is operating (i.e. outputting the optical signal), but does not output because it receive no input, when the B station is not yet operating. This behaviour is shown by the timing chart of Figure 4. Figure 4a shows the case in which an intra-office station starts earlier than a remote station and has no output, while the control signal RST is OFF, to have no received optical signal from the reflected beam so that nothing exists in the reproduced clock CKR. Figure 4b shows the case in which the remote station starts earlier than the intra-office station and receives only the signal beam from the remote station, while the control signal RST is OFF, so that the reproduced clock CKR has the frequency used by the remote station. During the time when the control signal RST is OFF, the status signal STC of the frequency discriminating circuit 50 which receives the clock CKR to output its discriminated frequency result, is inputted to the clock controlling circuit 60. Thus the clock frequency to be used by the intra-office station is different from the frequency used by the remote station and the clock controlling circuit sends its clock CKT to the optical transmitter 20. In the timing chart of Figure 4, the data encoded by using the clock CKT having its frequency determined during the time the control signal RST is OFF is sent out when the control signal RST is turned ON. In Figure 4a, the clock having the same frequency as that of the clock used by itself is reproduced and outputted (as the clock CKR) by the crosstalk, i.e. the reflected beam. Then, after the start of the remote station, the signal transmitted therefrom is reproduced to set the normal line. In Figure 4b the data coded by using the clock CKT having its frequency determined during the time the control signal RST is OFF is sent out, after the control signal RST is turned ON, to set the normal line. As has been described above, the setting of the communication line which has been impossible under the influences of the reflected beam in known communication systems can be automatically accomplished with the present invention.

After the communication line has been set between the two stations by the procedures described above, the line state can be checked at all times by comparing the sent and received clock frequencies of the intra-office station. In Figure 1, a status signal STM indicating the clock frequency of the intra-office station outputted from the clock controlling circuit 60 and the status signal STC indicating the clock frequency of the received signal outputted from the frequency discriminating circuit 50 are compared by the line diagnosing c.rcuit 70 receiving the two status signals. Here, in the case where the two status signals are different and in the case where the received clock frequency is within a predetermined range, it is judged that the line is normal. In the case where the two are identical or in the case where the received clock frequency is outside the predetermined range, it is judged that the line is abnormal to cause a phenomenon in which the signal outputted from the intra-office station is received by itself by the reflection so that no signal comes from the remote station. These are shown in the timing chart of Figure 5. Figure 5a shows the normal state in which the transmitted clock CKT and the received clock CKR are different and in which a line status signal STL from the line diagnosing circuit is high. In Figure 5b, on the other hand, it can be judged that section (L) is in the normal state and that section (M) is in the abnormal state in which the clock CKT and the clock CKR are equal so that the output signal of the intra-office station is received by its own through crosstalk. Then, it is presumed that the remote station has its power supply stopped or troubled or that the optical fibre 100 is broken. Section (N) is also in the abnormal state in which the clock CKR is irregular, and it is presumed that the abnormal state is caused as a result of the optical input at a lower level than the minimum received optical level of the optical receiver 30.

Incidentally, the line diagnosing circuit 70 copes with the comparison between the clock CKT and the clock CKR by diagnosing whether or not the clock CKT and the clock CKR are identical in the case where two kinds of frequencies are used or whether or not the clock CKR is within the predetermined range in the case where two or more frequencies are used.

An indicator 80 receives the status signal STL of the line diagnosing circuit 70 for informing the user of the line state by lighting a ready lamp, if the status signal STL is high and extinguishing it if the status signal STL is low. The indicator can naturally be exemplified by a system in which the lamp is lit when the abnormal state occurs.

The status signal STL is also inputted to the interface circuit 90 and can be used for exchange with the external data terminal only when the status signal STL is high, namely, the line is normal.

As has been described hereinbefore, the practical usability is remarkably improved because the optical output controlling circuit 40 operates after the start (e.g. after a main power supply or a reset operation) so that the line is automatically set for this time period. On the other hand, the practical usability and the reliability can be drastically improved because the line diagnosing circuit 70 can conduct the diagnosis of the communication system always and automatically merely by comparing the frequencies of its own sent and received clocks.

In Figure 1, the clock controlling circuit 60 is composed of an oscillating circuit 61, a variable frequency dividing circuit 62 and a control logic circuit 63. The oscillating circuit 61 oscillates with a frequency several times higher than the transmission clock frequency, and its frequency is divided at a predetermined ratio into a transmission clock frequency by the variable frequency dividing circuit 62. This frequency division ratio is controlled by the control logic circuit 63 which selects a clock having a frequency different from the received clock frequency judged by the frequency discriminating circuit 60 while the optical output controlling circuit 40 is stopping the output of the optical transmitter 20. The frequency division ratio may desirably be exemplified by a simple value such as 1/9, 1/10 or 1/11, and the control logic circuit 63 selects the frequency division of 1/9, 1/10 or 1/11 in accordance with the clock of the remote station. In this case, the circuit itself can be realised exclusively by a simple counter and several gate circuits. With the construction described above, the frequency selection can easily be conducted so that the communication system can be sufficiently flexible not only to reduce the circuit scale but also to cope easily with change in its clock frequency, if necessary.

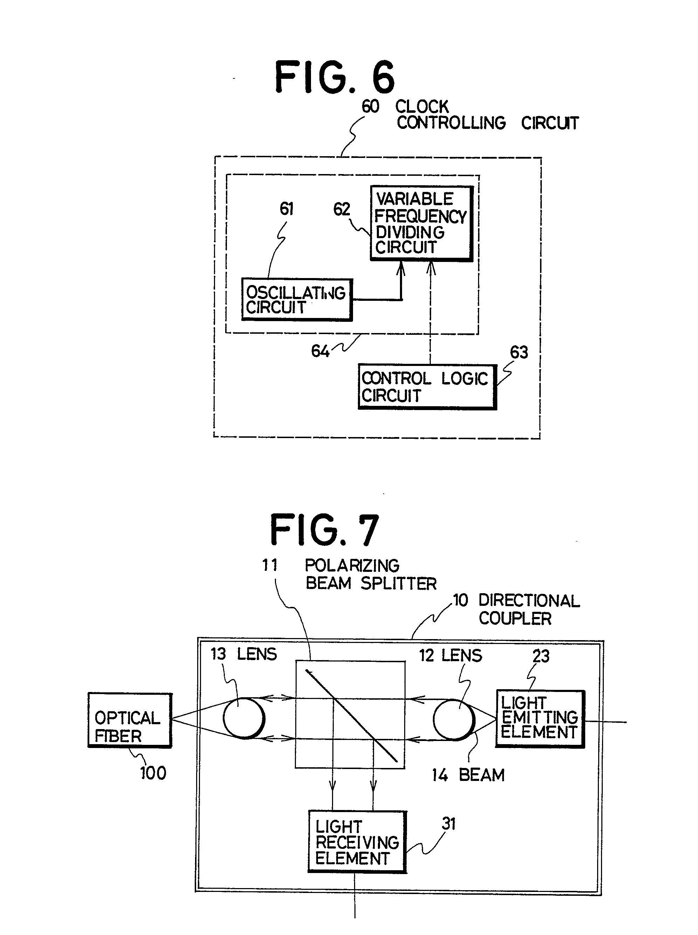

Figure 6 shows another embodiment which is slightly modified from the clock controlling circuit having the construction of Figure 1. In Figure 6, the clock controlling circuit 60 uses the same reference numerals as those of Figure 1. Reference numeral 64 denotes a circuit in which the oscillating circuit 61 and the variable frequency dividing circuit 62 are integrated into one package and which is newly developed in recent years so that several types are commercially available. Thus, several communication systems having absolutely the same internal functions as that of the communication system of Figure 1 can be conceived, although they have different constructions.

Incidentally, single transmission line communication using a single line optical wavelength, as in the present invention, cannot be freed from an optical loss of at least 6 dB because of the use of the directional coupler. This is because an optical loss of at least 3 dB is invited at each pass through the directional coupler. This makes it necessary to input efficiently the beam outputted from the light emitting element 23 to the optical fibre 100. The means for this is shown in Figure 7. As shown, the directional coupler 10 having the polarising beam splitter 11 built therein contains the light emitting element 23 and the light receiving element 31 integrated with each other. A beam 14 emitted from the light emitting element is transformed into a parallel beam by a lens 12, and this parallel beam is focused through the polarising beam splitter 11 by a lens 13 until it arrives at the optical fibre 100. On the other hand, the beam emanating from the optical fibre 100 is transformed into a parallel beam by the lens 13 and this parallel beam is reflected by the polarising beam splitter 11 to illuminate the light receiving element 31. In this construction, the optical path from the light emitting element to the optical fibre can be shortened to make the beam effectively incident upon the optical fibre. As a result, the apparent light emitting output can be increased to contribute markedly to long distance transmission. The light emitting and receiving elements 23,31 need not necessarily be integrated, but the effective light concentration resulting from integration can be achieved by shortening the optical path thereby contributing to long distance transmission. Size reduction can also be achieved by that integration.

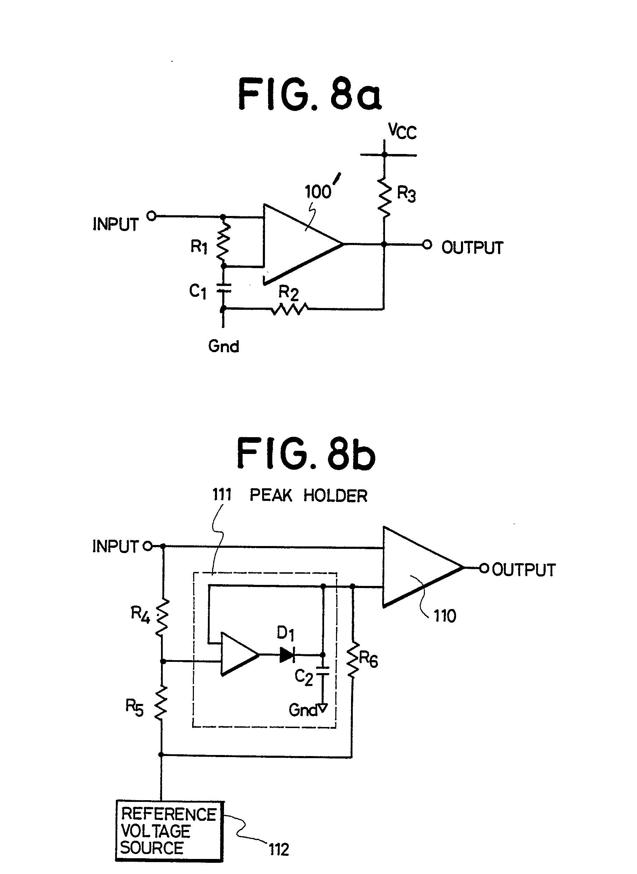

An embodiment of the comparator 33 of Figure 1 is shown in Figure 8. Figure 8a shows a comparator 100' whose threshold level varies following a time constant determined by $R_1.C_1$ at its input. This time constant has a value which is three or four times as large as the coded period. As a result, the threshold level crosses the substantial average value of the optical signal, as shown in Figure 3a. The optimum value of the time constant depends upon the marked percentage of the code, and it has been confirmed that the threshold value begins to follow the average value of the optical signal by increasing the mark percentage to twice or more if it is 20 to 80%. This type of comparator is advantageous in that it can be realised by a very simple circuit and that it is compatible with the other components of the communication system.

Figure 8b shows a comparator whose threshold level is set at half of the input peak value by a peak holder 111. A reference voltage source 112 is used to make the drift, if caused by the influence of temperature, reluctant to influence. This type of comparator is more complex than that of Figure 8a, but is suitable in the case in which it is to be realised by monolithic IC, etc.

In the communication system according to the present invention, the employment of two values for the frequency used is suitable for simplifying the circuitry. More specifically in Figure 1 the variable frequency dividing circuit 62 and the control logic circuit 63 of the clock control circuit 60 and the frequency discriminating circuit 50 have alternate circuitries so that their construction is very neat. The method of determining the two frequency values can provide satisfactory characteristics if the communication system satisfies the following equation:

$$\Delta M > \Delta F > \Delta m$$

where: $\Delta F$ designates the difference between the two frequencies; $\Delta m$ designates the minimum frequency difference that can be discriminated by the frequency discriminating circuit 50; and $\Delta M$ designates the maximum frequency difference that can be decoded by the decoder 34 of the optical receiver 30. In the above equation the upper limit ($\Delta M$) of the frequency difference is present at the point the decoder handles the data having clock components of the two frequencies commonly so that more decoding mistakes due to timing discrepancy become liable to occur as the frequency difference becomes larger. On the other hand, the lower limit ($\Delta m$) is present at the point that the frequency discriminating circuit produces more discrimination errors when it discriminates the two frequencies, as the frequency difference is smaller. In the case where the communication system is to be specifically manufactured, several embodiments are conceivable for realising the decoder or the frequency discriminating circuit. Since the communication system can sufficiently perform its function if it satisfies the above equation, no matter what circuit construction is adopted, the degree of freedom of design will be increased.

In Figure 1, the flow of data and clocks are indicated by solid lines, and the flow of control signals are indicated by broken lines. Despite this, however, it is naturally anticipated that the flow becomes more complex when the circuit is actually constructed and that lines or additional circuits for necessary signals, especially control signals increase. Moreover, a number of specific circuit types of individual blocks can be conceived to satisfy the functions of the communication system. These concepts are natural to engineers of electronic circuit design.

Since the single transmission line bidirectional communication system having the above specified construction uses a polarising beam splitter as the directional coupler 10, the near-end reflections in different polarising directions are eliminated, and only the remote-end reflections may be taken into consideration. The beam transmitted from an intra-office station has to go back and forth through the optical fibre 100 and has its attenuation factor twice as large as that of the optical signal of the remote station in order that it may be reflected at the remote-end and returned. As a result, long distance communication can be accomplished by eliminating the near-end reflection at the polarising beam splitter 11.

Since the optical signal is coded, moreover, it is outputted irrespective of the existence and content of the transmission data, and its optical intensity is substantially stabilised if it is averaged with time. Since the threshold level of the comparator 33 is automatically set at a substantially average value of the input signal intensity by the automatic threshold value controlling circuit, a weaker reflected beam can be ignored.

Since the threshold value is automatically set, on the other hand, it is unnecessary to adjust the threshold level when the communication system is installed or to consider the influences such as the dispersion of the elements used and temperature change.

Thus, the reflected beam is optically depressed at a low level, and the influences of the reflected beam are electrically eliminated. By both functions full duplex bidirectional long distance communication through a single transmission line is made possible.

In the illustrated communication system, furthermore, the output of the optical transmitter 20 is stopped at the time of switching on the power supply or a resetting operation. As a result, the clock frequency becomes different from that of the remote station by selecting a clock frequency different from the reproduced clock frequency, which is inputted whilst the optical receiver 30 is stopped and judged by the frequency discriminating circuit 50, by the clock controlling circuit 60. This facilitates through frequency separation of the electric signal the discrimination between the signal from the remote station communication system and its own output signal received due to crosstalk. In case no signal is inputted at first to the optical receiver 30, on the other hand, a different clock frequency is adopted in the aforementioned procedure, after the remote station communication system starts its operation, by adopting a clock of predetermined frequency and outputting it from the optical transmitter 20 so that the clock frequencies of the two are different from one another.

Even in this case if the two communication systems are troubled by some cause during operation and disabled from communicating with each other the trouble can be detected merely by monitoring the reproduced clock frequency. More specifically, the line diagnosing circuit 70 compares the reproduced clock frequency and its transmission clock frequency and can judge, when the former becomes equal to the latter, that the remote station communication system is not operating or the optical fibre line is deranged, e.g. broken, so that only the output beam of its own due to crosstalk is inputted. When the reproduced clock frequency is different from the transmission clock frequency and outside a predetermined range, it can be judged that the remote station communication system is producing an abnormal output or its transmission line characteristics have deteriorated drastically.

As has been described hereinbefore, it is possible to provide a highly reliable communication circuit which can better eliminate the influences of crosstalk and can reliably grasp the state of a single transmission line.

According to the present invention single line transmission line bidirectional long distance optical communication may be accomplished simply at low cost to suppress the cost of the whole communication system by simply and markedly reducing the influences of the reflected beam. It is further possible automatically to set a communication arrangement which is composed of two communication systems according to the present invention and a single optical transmission line between data terminal systems and to monitor and troubleshoot the circuit state at all times thereby to enhance the practical usability and reliability.

## Claims

1. A single transmission line bidirectional optical communication system characterised by comprising: a directional coupler (10) including a polarising beam splitter (11) and an optical system for separating an optical output signal to be outputted to a single transmission line (100) and an optical input signal to be inputted from said single transmission line; an optical transmitting circuit (20) for coding original data (D0) by using a clock signal (CKT) of predetermined frequency and for subsequently converting the coded data into an optical signal by means of a light emitting element (23); an optical receiving circuit (30) for converting an optical input signal into an electric signal, for amplifying the electric signal, for recognising the electric signal through a comparator (33) including an automatic threshold controlling circuit for automatically setting a threshold level at a substantially average value of input signal intensities, and for subsequently decoding the signal to reproduce and output the clock signal and data (D1); an optical output controlling circuit (40) for controlling whether or not an optical signal needs to be outputted from said optical transmitting circuit (20); a frequency discriminating circuit (50) for discriminating the frequency of said reproduced clock signal (CKR) to output a status signal (STC) indicating said frequency; and a clock controlling circuit (60) for determining and outputting its own transmission clock frequency (CKT) according to the status signal (STC) coming from said frequency discriminating circuit (50) in the state in which no optical signal is outputted from said optical transmitting circuit (20) under the control of said optical output controlling circuit (40), and for outputting a status signal (STM) indicating said transmission clock frequency.

2. A single transmission line bidirectional optical communication system as claimed in claim 1 characterised in that said directional coupler (10) and the light emitting element (23) in said optical transmitting circuit are integrated with each other.

3. A single transmission line bidirectional optical communication system as claimed in claim 1 characterised in that said optical output controlling circuit (40) is arranged to interrupt the optical signal output from said optical transmitting circuit (20) immediately after a power supply or resetting operation and outputs the optical signal after a lapse of a predetermined time period.

4. A single transmission line bidirectional optical communication system as claimed in any preceding claim characterised in that said clock controlling circuit (60) comprises an oscillation circuit (61), a variable frequency dividing circuit (62) and a control logic circuit (63) arranged so that, in operation, the oscillation circuit outputs an clock signal of predetermined frequency, the variable frequency dividing circuit divides the frequency of said clock signal at a predetermined ratio, and the control logic circuit determines the frequency division rate of said variable frequency dividing circuit in accordance with the status signal (STC) coming from said frequency discriminating circuit (50).

5. A single transmission line bidirectional optical communication system as claimed in any preceding claim characterised in that the automatic threshold controlling circuit in said optical receiving circuit is constructed such that its comparator (100') has its threshold value level varied with an input by using an RC circuit (R1, C1) which has a time constant several times larger than the code period of data.

6. A single transmission line bidirectional optical communication system as claimed in any of claims 1 to 4 characterised in that the automatic threshold controlling circuit in said optical receiving circuit comprises a peak holder (111).

7. A single transmission line bidirectional optical communication system as claimed in any preceding claim characterised in that, in operation, the clock frequency outputted from said clock controlling circuit (60) has two values.

8. A single transmission line bidirectional optical communication system as claimed in claim 7 characterised in that, in operation, the following inequalities hold, if the difference of said two frequency values is denoted by $\Delta F$, the minimum frequency difference to be recognised by said frequency discriminating circuit by $\Delta m$, and the maximum frequency difference to be decoded by said optical receiving circuit (30) by $\Delta M$:

$$\Delta M > \Delta F > \Delta m.$$

9. A single transmission line bidirectional optical communication system as claimed in any preceding claim characterised in that, in operation, data encoding is conducted within 20% to 80% mark percentage.

10. A single transmission line bidirectional optical communication system as claimed in any preceding claim characterised by including a line diagnosing circuit (70) for diagnosing the state of the transmission line (100) from the status signal (STC) coming from said frequency discriminating circuit (50) in the state in which an optical signal is outputted from said optical transmitting circuit (20) under the control of said optical output controlling circuit (40), and said status signal (STM) coming from said clock controlling circuit (60).

11. A single transmission line bidirectional optical communication system as claimed in claim 10 characterised in that said line diagnosing circuit (60), in operation, outputs a status signal (STL) indicating that the transmission line (100) is normal, in the case where a reception clock frequency is different from a transmission clock frequency and within the range of said predetermined range which is judged from both the status signal (STM) outputted from said clock controlling circuit (60) and indicating its own transmission clock frequency and the status signal (STC) outputted from said frequency discriminating circuit (50) and indicating a reception clock frequency.

12. A single transmission line bidirectional optical communication system as claimed in claim 10 or 11 characterised in that said line diagnosing circuit (70), in operation, outputs a status signal (STL) indicating that the transmission line is abnormal in the case where a reception clock frequency is either identical to a transmission clock frequency which is judged from both the status signal (STM) outputted from said clock controlling circuit (60) and indicating its own transmission clock frequency and the status signal (STC) outputted from said frequency discriminating circuit (50) and indicating a reception clock frequency outside a predetermined range.

# FIG. 1

A STATION

B STATION

OPTICAL FIBER 100

10 DIRECTIONAL COUPLER

11 POLARIZING BEAM SPLITTER

a

b

20 OPTICAL TRANSMITTER

21 CODER

22 LIGHT EMITTING ELEMENT DRIVER

23 LIGHT EMITTING ELEMENT

40 OPTICAL OUTPUT CONTROLLING CIRCUIT

RST

CLOCK CONTROLLING CIRCUIT 60

62 VARIABLE FREQUENCY DIVIDING CIRCUIT

61 OSCILLATING CIRCUIT

63 CONTROL LOGIC CIRCUIT

30 OPTICAL RECEIVER

31 LIGHT RECEIVING ELEMENT

32 AMPLIFYING CIRCUIT

33 COMPARATOR

34 DECODER

50 FREQUENCY DISCRIMINATING CIRCUIT

CKR

STC

STM

70 LINE DIAGNOSING CIRCUIT

80 INDICATOR

STL

90 INTER FACE CIRCUIT

DO

DI

CKT

# FIG. 2a

DISTANCE (Km)

# FIG. 2b

DISTANCE (Km)

# FIG. 3

# FIG. 4a

# FIG. 4b

# FIG. 5a

# FIG. 5b

# FIG. 6

60 CLOCK CONTROLLING CIRCUIT

61 OSCILLATING CIRCUIT

62 VARIABLE FREQUENCY DIVIDING CIRCUIT

64

63 CONTROL LOGIC CIRCUIT

# FIG. 7

11 POLARIZING BEAM SPLITTER

10 DIRECTIONAL COUPLER

13 LENS

12 LENS

23 LIGHT EMITTING ELEMENT

OPTICAL FIBER

100

14 BEAM

LIGHT RECEIVING ELEMENT

31

# FIG. 8a

# FIG. 8b

111   PEAK  HOLDER